# EUROPÄISCHE PATENTANMELDUNG

(11) **EP 4 050 745 A1**
(43) Veröffentlichungstag der Anmeldung: **31.08.2022**
(21) Anmeldenummer: 21159204.3
(22) Anmeldetag: 25.02.2021
(51) Int. Cl.: H02H 9/00, H02H 11/00, H04L 12/10

(54) **KOMMUNIKATIONSGERÄT FÜR EIN 2-DRAHT-ETHERNET-BUSSYSTEM UND LEITUNGSTREIBER**

(71) Anmelder: Siemens Aktiengesellschaft, 80333 München (DE)
(72) Erfinder: Bachmann, Reinhard, 67360 Lingenfeld (DE); Geppert, Michael, 77833 Ottersweier (DE); Gottron, Jens, 76137 Karlsruhe (DE); Klamm, Arnold, 76870 Kandel (DE)

(57) **Zusammenfassung**

Die Erfindung betrifft ein Kommunikationsgerät für ein 2-Draht-Ethernet-Bussystem mit einem Brückengleichrichter, der zwei busseitige Anschlüsse (B1-B2) und zwei geräteseitige Anschlüsse (T1-T2) umfasst. Außerdem ist ein Netzteil (PSU) vorgesehen, das über eine erste Spule (L1) mit einer Kathode einer Diode (D), deren Anode an einen ersten geräteseitigen Anschluss (T1) des Brückengleichrichters angeschlossen ist, und über eine zweite Spule (L2) mit einem zweiten geräteseitigen Anschluss (T2) des Brückengleichrichters verbunden ist. Darüber hinaus umfasst das Kommunikationsgerät eine PHY-Schnittstellenvorrichtung (PHY) zur Codierung und Decodierung von zwischen dem Kommunikationsgerät und dem 2-Draht-Ethernet-Bussystem ausgetauschten Daten. Die PHY-Schnittstellenvorrichtung ist über eine erste Hochpassfilteranordnung (H1) mit der Kathode der Diode und über eine zweite Hochpassfilteranordnung (H2) mit dem zweiten geräteseitigen Anschluss des Brückengleichrichters verbunden.

## Beschreibung

Die vorliegende Erfindung betrifft ein Kommunikationsgerät für ein 2-Draht-Ethernet-Bussystem und einen Leitungstreiber für einen Anschluss eines Kommunikationsgerät, das ein Netzteil und eine PHY-Schnittstellenvorrichtung umfasst, an ein 2-Draht-Ethernet-Bussystem insbesondere innerhalb eines industriellen Automatisierungssystems. Das Kommunikationsgerät umfasst vorzugsweise einen integrierten Leitungstreiber, während der Leitungstreiber insbesondere für ein Kommunikationsgerät ohne integrierten Leitungstreiber vorgesehen ist.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Ethernet Advanced Physical Layer (Ethernet APL) stellt eine OSI Layer 1 Erweiterung dar, die speziell Anforderungen in der Prozessindustrie Rechnung trägt. Dabei steht insbesondere eine Kommunikation mit hoher Geschwindigkeit über große Entfernungen sowie 2-adrige Kabel und Schutzmaßnahmen für einen sicheren Betrieb innerhalb explosionsgefährdeter Bereiche im Vordergrund. Als Barriere zur Realisierung von Eigensicherheit ist jeweils eine elektronische Schaltung an Ausgängen bzw. Eingängen von Switchen und Feldgeräten vorgesehen. Derartige Schaltungen verhindern, dass zündfähige elektrische Energie in Anschlüsse gelangt. Insbesondere müssen Geräte, die in explosionsgefährdeten Bereichen betrieben werden, durch eine Schutzart gemäß Normenreihe IEC60079 geschützt werden. Hierdurch wird sichergestellt, dass eine explosive Umgebung selbst in einem mehrfachen Fehlerfall nicht durch heiße Oberflächen oder Funkenerzeugung entzündet werden kann. Dies erfolgt durch eine sichere Begrenzung von Spannungen und Strömen in eigensicher ausgestalteten Schaltkreisen.

Induktivitäten in Schaltkreisen können in Fehlerfällen, insbesondere bei Leitungsbruch, zu unzulässig hohen Spannungen und Strömen führen. Um dies zu verhindern, werden üblicherweise Dioden in Sperrrichtung zu einem funktionalen Stromfluss und parallel zu einer Spule verwendet. Bei einem Leitungsbruch in einer Zuleitung würde eine Spule ohne Schutzelemente einen Strom durch einen entstehenden Öffnungsfunken treiben und eine Zündung erzeugen. Schutzdioden sorgen dafür, dass sich Energie einer Spule nicht durch den Öffnungsfunken entlädt, sondern über die Schutzdioden.

Bei gemultiplexten Versorgungsleitungen zur gleichzeitigen Energie- und Datenübertragung werden abzusichernde Induktivitäten zur Trennung von Versorgungsspannung und Signalspannung verwendet. Schutzdioden können eine Signalübertragung aufgrund ihrer Sperrschichtkapazität erheblich stören, insbesondere wenn die Signalübertragung mit hoher Datenrate bzw. Übertragungsfrequenz erfolgt. Grundsätzlich können Schutzdioden mit geringer Sperrschichtkapazität ausgewählt werden. Da derartige Schutzdioden jedoch üblicherweise nur eine geringe Stromtragfähigkeit aufweisen, bietet sich eine Auswahl von Schutzdioden mit geringer Sperrschichtkapazität nur bei kleinen Nennströmen und niedriger Übertragungsfrequenz an. Insbesondere bei Ethernet APL Phase 2 wird ein solcher Kompromiss problematisch werden, da sowohl hohe Datenübertragungsraten als auch hohe Versorgungsleistungen gefordert sind.

Der vorliegenden Erfindung liegt daher die Aufgabe zugrunde ein Kommunikationsgerät ein Kommunikationsgerät für ein 2-Draht-Ethernet-Bussystem anzugeben, das sowohl hohe Datenübertragungsraten als auch hohe Versorgungsleistungen ermöglicht und in explosionsgefährdeten Umgebungen betrieben werden kann, sowie eine geeignete Lösung zur Implementierung der Erfindung zu schaffen.

Diese Aufgabe wird erfindungsgemäß durch ein Kommunikationsgerät mit den in Anspruch 1 angegebenen Merkmalen und durch einen Leitungstreiber mit den in Anspruch 15 angegebenen Merkmalen gelöst.

Das erfindungsgemäße Kommunikationsgerät für ein 2-Draht-Ethernet-Bussystem weist einen Brückengleichrichter, der zwei busseitige Anschlüsse und zwei geräteseitige Anschlüsse umfasst, und ein Netzteil auf. Das Netzteil ist über eine erste Spule mit einer Kathode einer Diode verbunden, deren Anode an einen ersten geräteseitigen Anschluss des Brückengleichrichters angeschlossen ist. Außerdem ist das Netzteil über eine zweite Spule mit einem zweiten geräteseitigen Anschluss des Brückengleichrichters verbunden.

Darüber hinaus umfasst das erfindungsgemäße Kommunikationsgerät eine PHY-Schnittstellenvorrichtung zur Codierung und Decodierung von zwischen dem Kommunikationsgerät und dem 2-Draht-Ethernet-Bussystem ausgetauschten Daten. Dabei ist die PHY-Schnittstellenvorrichtung über eine erste Hochpassfilteranordnung mit der Kathode der Diode und über eine zweite Hochpassfilteranordnung mit dem zweiten geräteseitigen Anschluss des Brückengleichrichters verbunden.

Die beiden busseitigen Anschlüsse sind vorteilhafterweise nicht nur verpolsicher, sondern auch vertauschbar. Das erfindungsgemäße Kommunikationsgerät funktioniert somit unabhängig von einer Anschaltung von Plus- und Minus-Pol einer Versorgungsspannungsquelle an die beiden busseitigen Anschlüsse. Darüber hinaus sind die beiden mit dem Netzteil verbundenen Spulen immer über 2 Gleichrichter-Dioden und die Diode abgesichert, also über insgesamt 3 Dioden in Reihe. Insbesondere stellen die beiden Gleichrichter-Dioden in Durchflussrichtung keine Last für ein zu übertragendes Signal dar. Lediglich die beiden Gleichrichter-Dioden in Sperrrichtung bringen ihre Sperrschichtkapazität ein. Gegenüber bestehenden Lösungen, bei denen die beiden mit dem Netzteil verbundenen Spulen jeweils mit einer zusätzlichen, üblicherweise zumindest 2 Freilaufdioden umfassenden Diodenanordnung parallel beschaltet sind, ist die Sperrschichtkapazität bei der vorliegenden Erfindung erheblich reduziert. Somit ist das erfindungsgemäße Kommunikationsgerät für hohe Datenübertragungsraten bei gleichzeitig hoher Versorgungsleistung geeignet.

Durch die beiden Spulen ist insbesondere eine Tiefpassfilteranordnung für das Netzteil gebildet. Vorteilhafterweise sind die beiden Spulen jeweils ohne zusätzliche zu ihnen parallel geschaltete Freilaufdiodenanordnungen an das Netzteil angeschlossen. Dies ermöglicht eine erhebliche Reduktion der Sperrschichtkapazität. Darüber hinaus umfasst das Kommunikationsgerät entsprechend einer bevorzugten Ausgestaltung der vorliegenden Erfindung einen Buseingang zum Anschluss an gemultiplexte Versorgungsleitungen des 2-Draht-Ethernet-Bussystems, die zur gleichzeitigen Energie- und Datenübertragung ausgestaltet sind. Die busseitigen Anschlüsse des Brückengleichrichters sind mit dem Buseingang verbunden. Das Netzteil ist insbesondere als Gleichspannungsnetzteil ausgestaltet. Dabei ist die erste Spule mit einem ersten Netzteilanschluss verbunden, während die zweite Spule mit einem zweiten Netzteilanschluss verbunden ist. Vorzugsweise ist das Kommunikationsgerät entsprechend Ethernet Advanced Physical Layer ausgestaltet und ermöglicht damit eine 2-Draht-Kommunikation mit hoher Datenrate über längere Distanzen.

Entsprechend einer bevorzugten Ausgestaltung der vorliegenden Erfindung umfasst der Brückengleichrichter vier Dioden. Dabei ist eine Anode einer ersten Gleichrichter-Diode mit dem ersten busseitigen Anschluss und eine Kathode der ersten Gleichrichter-Diode mit dem ersten geräteseitigen Anschluss verbunden. Außerdem ist eine Anode einer zweiten Gleichrichter-Diode mit dem zweiten busseitigen Anschluss und eine Kathode der zweiten Gleichrichter-Diode mit dem ersten geräteseitigen Anschluss verbunden. Darüber hinaus ist eine Kathode einer dritten Gleichrichter-Diode mit dem ersten busseitigen Anschluss und eine Anode der dritten Gleichrichter-Diode mit dem zweiten geräteseitigen Anschluss verbunden. Schließlich ist eine Kathode einer vierten Gleichrichter-Diode mit dem zweiten busseitigen Anschluss und eine Anode der vierten Gleichrichter-Diode mit dem zweiten geräteseitigen Anschluss verbunden. In Abhängigkeit eines Anschlusses des Kommunikationsgeräts an das 2-Draht-Ethernet-Bussystem ist vorteilhafterweise entweder durch die erste Gleichrichter-Diode, die Diode sowie die vierte Gleichrichter-Diode oder durch die zweite Gleichrichter-Diode, die Diode sowie die dritte Gleichrichter-Diode eine jeweils drei in Reihe angeordnete Dioden umfassende Freilaufdiodenanordnung für die beiden Spulen gebildet. Somit sind die Spulen bei einfachen Fehlern innerhalb der Freilaufdiodenanordnung immer über 2 Dioden abgesichert.

Vorteilhafterweise ist die PHY-Schnittstellenvorrichtung für eine differentielle Datensignalübertragung ausgestaltet und umfasst zumindest zwei Sendeeinheiten sowie zumindest zwei Empfangseinheiten. Die beiden Hochpassfilteranordnungen für die PHY-Schnittstellenvorrichtung umfassen vorzugsweise jeweils einen niederohmigen Widerstand, einen hochohmigen Widerstand sowie eine Kondensatoranordnung mit zumindest zwei in Reihe geschaltete Kondensatoren. Dabei sind die niederohmigen Widerstände jeweils mit einer Sendeeinheit und mit der jeweiligen Kondensatoranordnung verbunden, während die hochohmigen Widerstände jeweils mit einer Empfangseinheit und mit der jeweiligen Kondensatoranordnung verbunden sind. Darüber hinaus ist die Kondensatoranordnung der ersten Hochpassfilteranordnung bei dieser Ausgestaltung mit der Kathode der Diode verbunden, während die Kondensatoranordnung der zweiten Hochpassfilteranordnung mit dem zweiten geräteseitigen Anschluss des Brückengleichrichters verbunden ist. Die hochohmigen Widerstände weisen beispielsweise eine Impedanz von ca. 2-5 kOhm auf, während die niederohmigen Widerstände eine Impedanz von ca. 50 Ohm haben. Auf diese Weise sind die Widerstände einerseits an Impedanzen von 2-Draht-Leitungen angepasst und verursachen andererseits keine nachteilige Dämpfung hochfrequenter Signale.

Entsprechend einer besonders bevorzugten Ausgestaltung der vorliegenden Erfindung ist der Brückengleichrichter zur Verwendung in einem eigensicheren Schaltkreis ausgestaltet und weist gemäß IEC60079-11 eine sichere Anbindung an zu schützende Induktivitäten auf. Insbesondere ist durch den Brückengleichrichter, die Diode, die erste und zweite Spule sowie die erste und zweite Hochpassfilteranordnung ein in das Kommunikationsgerät integrierter Leitungstreiber gebildet.

Entsprechend einer alternativen Ausführungsform der vorliegenden Erfindung ist das Netzteil über die erste Spule mit dem ersten geräteseitigen Anschluss des Brückengleichrichters statt mit der Diode verbunden. Dabei ist die Diode buseingangsseitig statt geräteseitig an den Brückengleichrichter angeschlossen. Insbesondere ist die Anode der Diode mit einem ersten Busanschluss des Kommunikationsgeräts verbunden. Die Kathode der Diode ist mit dem ersten busseitigen Anschluss des Brückengleichrichters verbunden. Dabei bildet der zweite busseitige Anschluss des Brückengleichrichters einen zweiten Busanschluss des Kommunikationsgeräts. Die alternative Ausführungsform der vorliegenden Erfindung ist ebenfalls für hohe Datenübertragungsraten bei gleichzeitig hoher Versorgungsleistung geeignet. Jedoch sind die beiden Busanschlüsse des Kommunikationsgeräts nicht vertauschbar.

Der erfindungsgemäße Leitungstreiber für einen Anschluss eines Kommunikationsgeräts, das ein Netzteil und eine PHY-Schnittstellenvorrichtung umfasst, an ein 2-Draht-Ethernet-Bussystem ist insbesondere für Kommunikationsgeräte ohne integrierten Leitungstreiber vorgesehen. Der Leitungstreiber umfasst einen Brückengleichrichter, der zwei busseitige Anschlüsse und zwei geräteseitige Anschlüsse umfasst, und eine Diode, deren Anode an einen ersten geräteseitigen Anschluss des Brückengleichrichters angeschlossen ist. Außerdem sind eine mit dem Netzteil des Kommunikationsgeräts verbindbare erste Spule, die mit einer Kathode der Diode verbunden ist, und eine mit dem Netzteil des Kommunikationsgeräts verbindbare zweite Spule vorgesehen, die mit einem zweiten geräteseitigen Anschluss des Brückengleichrichters verbunden ist. Darüber hinaus umfasst der Leitungstreiber eine mit der PHY-Schnittstellenvorrichtung des Kommunikationsgeräts verbindbare erste Hochpassfilteranordnung, die mit der Kathode der Diode verbunden ist, und eine mit der PHY-Schnittstellenvorrichtung des Kommunikationsgeräts verbindbare zweite Hochpassfilteranordnung, die mit dem zweiten geräteseitigen Anschluss des Brückengleichrichters verbunden ist.

Mit dem erfindungsgemäßen Leitungstreiber können insbesondere bestehende Kommunikationsgeräte für hohe Datenübertragungsraten bei gleichzeitig hoher Versorgungsleistung ertüchtigt werden. Auch bei derartigen Anwendungsfällen sind die beiden busseitigen Anschlüsse nicht nur verpolsicher, sondern auch vertauschbar, und die beiden mit dem Netzteil verbindbaren Spulen sind immer über insgesamt 3 Dioden in Reihe abgesichert.

Die vorliegende Erfindung wird nachfolgend an einem Ausführungsbeispiel anhand der Zeichnung näher erläutert. Es zeigt
- Figur 1: eine Absicherung einer Spule mittels einer parallel geschalteten Freilaufdiodenanordnung entsprechend dem Stand der Technik,
- Figur 2: ein auf hohe Datenübertragungsraten bei gleichzeitig hoher Versorgungsleistung ausgelegtes Kommunikationsgerät für ein 2-Draht-Ethernet-Bussystem.

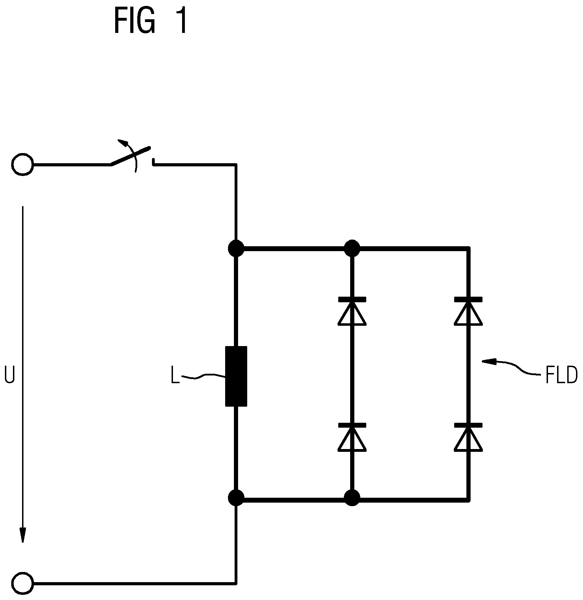

Bei Verwendung einer Spule L kann es in Fehlerfällen, wie Leitungsbruch, zu unzulässig hohen Spannungen und Strömen kommen. Nach Abschalten einer in Figur 1 dargestellten Versorgungsspannungsquelle U bewirkt Selbstinduktion der Spule L, dass zunächst Strom in ursprünglicher Richtung weiter durch die Spule L fließt. Ohne jegliche Schutzelemente würde eine Spannungsspitze entstehen, die insbesondere in explosionsgefährdeten Bereichen eine Zündung hervorrufen kann. Mittels einer Freilaufdiodenanordnung FLD wird erreicht, dass sich Energie der Spule L nicht durch einen Öffnungsfunken, sondern über Dioden entladen kann. Die Dioden der Freilaufdiodenanordnung FLD werden dabei in Sperrrichtung zu einem funktionalen Stromfluss und parallel zur Spule L angeordnet. Insbesondere bei einer in zahlreichen Anwendungsfällen geforderten Verwendung mehrerer Dioden in einer Freilaufdiodenanordnung FLD machen sich ihre Sperrschichtkapazitäten negativ bemerkbar und stören somit eine Signalübertragung mit hoher Datenrate erheblich.

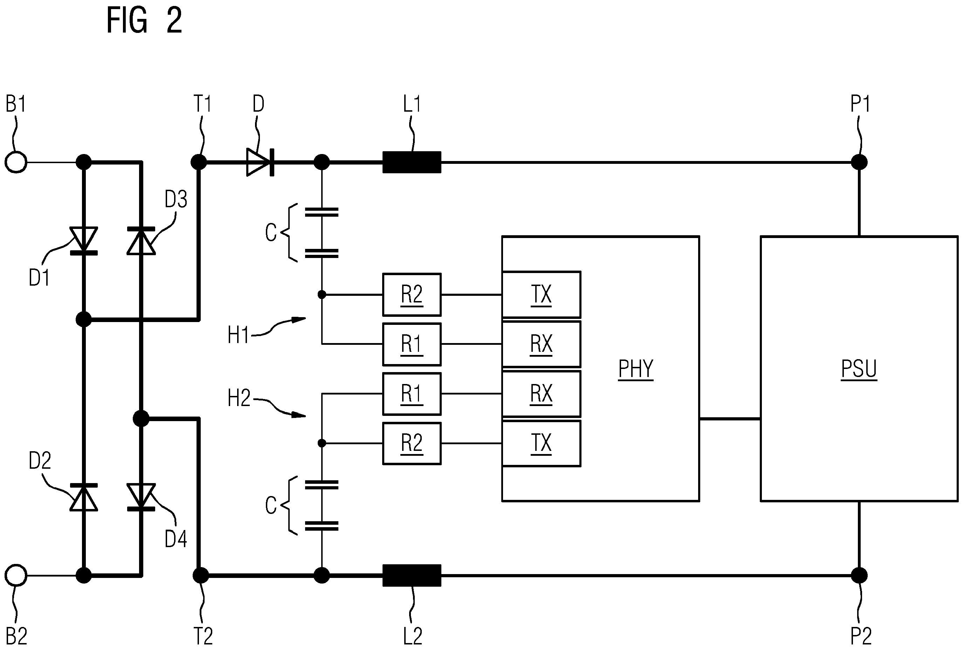

Derartige Probleme treten bei dem in Figur 2 dargestellten Kommunikationsgerät für ein 2-Draht-Ethernet-Bussystem erfindungsgemäß nicht auf. Im vorliegenden Ausführungsbeispiel ist das Kommunikationsgerät entsprechend Ethernet Advanced Physical Layer ausgestaltet und weist einen Brückengleichrichter auf, der vier Gleichrichter-Dioden D1-D4, zwei busseitige Anschlüsse B1-B2 und zwei geräteseitige Anschlüsse T1-T2 umfasst. Insbesondere umfasst das Kommunikationsgerät einen Bus eingang zum Anschluss an gemultiplexte Versorgungsleitungen des 2-Draht-Ethernet-Bussystems, die zur gleichzeitigen Energie- und Datenübertragung ausgestaltet sind. Dabei wird der Buseingang durch die busseitigen Anschlüsse B1-B2 des Brückengleichrichters gebildet.

Entsprechend Figur 2 ist eine Anode einer ersten Gleichrichter-Diode D1 mit einem ersten busseitigen Anschluss B1 verbunden, während eine Kathode der ersten Gleichrichter-Diode D1 mit einem ersten geräteseitigen Anschluss T1 verbunden ist. Analog dazu ist eine Anode einer zweiten Gleichrichter-Diode D2 mit einem zweiten busseitigen Anschluss B2 verbunden, während eine Kathode der zweiten Gleichrichter-Diode D2 mit dem ersten geräteseitigen Anschluss T1 verbunden ist. Des Weiteren ist eine Kathode einer dritten Gleichrichter-Diode D3 mit dem ersten busseitigen Anschluss B1 verbunden, während eine Anode der dritten Gleichrichter-Diode D3 mit einem zweiten geräteseitigen Anschluss T2 verbunden ist. Außerdem ist eine Kathode einer vierten Gleichrichter-Diode D4 mit dem zweiten busseitigen Anschluss B2 verbunden, während eine Anode der vierten Gleichrichter-Diode D4 mit dem zweiten geräteseitigen Anschluss T2 verbunden ist.

Außerdem umfasst das Kommunikationsgerät ein Netzteil PSU, das über eine erste Spule L1 mit einer Kathode einer Diode D verbunden ist, deren Anode am ersten geräteseitigen Anschluss T1 des Brückengleichrichters angeschlossen ist. Über eine zweite Spule L2 ist das Netzteil PSU mit dem zweiten geräteseitigen Anschluss T2 des Brückengleichrichters verbunden.

Das Netzteil PSU ist als Gleichspannungsnetzteil ausgestaltet und über einen ersten Netzteilanschluss P1 mit der ersten Spule L1 verbunden, während ein zweiter Netzteilanschluss P2 mit der zweiten Spule L2 verbunden ist. Durch die beiden Spulen L1-L2 ist eine Tiefpassfilteranordnung für das Netzteil PSU gebildet. Dabei sind die beiden Spulen L1-L2 jeweils ohne zusätzliche zu ihnen parallel geschaltete Freilaufdiodenanordnungen an das Netzteil PSU angeschlossen.

In Abhängigkeit eines Anschlusses des Kommunikationsgeräts an das 2-Draht-Ethernet-Bussystem ist entweder durch die erste Gleichrichter-Diode D1, die Diode D sowie die vierte Gleichrichter-Diode D4 oder durch die zweite Gleichrichter-Diode D2, die Diode D sowie die dritte Gleichrichter-Diode D3 eine jeweils drei in Reihe angeordnete Dioden umfassende Freilaufdiodenanordnung für die beiden Spulen L1-L2 gebildet. Vorzugsweise ist der Brückengleichrichter zur Verwendung in einem eigensicheren Schaltkreis ausgestaltet und weist gemäß IEC60079-11 eine sichere Anbindung an zu schützende Induktivitäten, nämlich die Spulen L1-12, auf.

Entsprechend einer alternativen, in den Figuren nicht explizit dargestellten Ausführungsvariante ist das Netzteil PSU über die erste Spule L1 direkt mit dem ersten geräteseitigen Anschluss T1 des Brückengleichrichters statt mit der Diode D verbunden. Die Diode D ist in diesem Fall buseingangsseitig statt geräteseitig an den Brückengleichrichter angeschlossen. Dabei ist die Anode der Diode D mit einem ersten Busanschluss des Kommunikationsgeräts verbunden, während die Kathode der Diode ist mit dem ersten busseitigen Anschluss B1 des Brückengleichrichters verbunden ist. Der zweite busseitige Anschluss B2 des Brückengleichrichters bildet bei der alternativen Ausführungsvariante einen zweiten Busanschluss des Kommunikationsgeräts. Die beiden Busanschlüsse des Kommunikationsgeräts sind bei der alternativen Ausführungsvariante nicht vertauschbar.

Darüber hinaus weist das Kommunikationsgerät eine PHY-Schnittstellenvorrichtung PHY zur Codierung und Decodierung von zwischen dem Kommunikationsgerät und dem 2-Draht-Ethernet-Bussystem ausgetauschten Daten auf. Die PHY-Schnittstellenvorrichtung PHY ist über eine erste Hochpassfilteranordnung H1 mit der Kathode der Diode D und über eine zweite Hochpassfilteranordnung H2 mit dem zweiten geräteseitigen Anschluss T2 des Brückengleichrichters verbunden. Insbesondere ist die PHY-Schnittstellenvorrichtung PHY für eine differentielle Datensignalübertragung ausgestaltet und umfasst zwei Sendeeinheiten TX sowie zwei Empfangseinheiten RX.

Die beiden Hochpassfilteranordnungen H1-H2 für die PHY-Schnittstellenvorrichtung PHY umfassen jeweils einen hochohmigen Widerstand R1, einen niederohmigen Widerstand R2 sowie eine Kondensatoranordnung C mit zumindest zwei in Reihe geschaltete Kondensatoren. Die hochohmigen Widerstände R1 sind jeweils mit einer Empfangseinheit RX und mit der jeweiligen Kondensatoranordnung C verbunden. Dagegen sind die niederohmigen Widerstände R2 jeweils mit einer Sendeeinheit TX und mit der jeweiligen Kondensatoranordnung C verbunden. Die Kondensatoranordnung C der ersten Hochpassfilteranordnung H1 ist mit der Kathode der Diode D verbunden, während die Kondensatoranordnung C der zweiten Hochpassfilteranordnung H2 mit dem zweiten geräteseitigen Anschluss T2 des Brückengleichrichters verbunden ist. Vorzugsweise haben die hochohmigen Widerstände R1 eine Impedanz von 2-5 kOhm und die niederohmigen Widerstände R2 eine Impedanz von 50 Ohm.

Im vorliegenden Ausführungsbeispiel ist durch den Brückengleichrichter, die Diode D, die erste Spule L1, die zweite Spule L2, die erste Hochpassfilteranordnung H1 und die zweite Hochpassfilteranordnung H2 ein in das Kommunikationsgerät integrierter Leitungstreiber gebildet. Grundsätzlich kann ein solcher Leitungstreiber auch als externes bzw. separates Gerät ausgestaltet sein und zur Ertüchtigung bestehender Kommunikationsgeräte für hohe Datenübertragungsraten bei gleichzeitig hoher Versorgungsleistung verwendet werden. Auch bei derartigen Anwendungsfällen sind einem Netzteil zugeordnete Spulen immer über insgesamt 3 Dioden in Reihe abgesichert.

## Patentansprüche

1. Kommunikationsgerät für ein 2-Draht-Ethernet-Bussystem mit
- einem Brückengleichrichter, der zwei busseitige Anschlüsse (B1-B2) und zwei geräteseitige Anschlüsse (T1-T2) umfasst,
- einem Netzteil (PSU), das über eine erste Spule (L1) mit einer Kathode einer Diode (D), deren Anode an einen ersten geräteseitigen Anschluss (T1) des Brückengleichrichters angeschlossen ist, und über eine zweite Spule (L2) mit einem zweiten geräteseitigen Anschluss (T2) des Brückengleichrichters verbunden ist,
- einer PHY-Schnittstellenvorrichtung (PHY) zur Codierung und Decodierung von zwischen dem Kommunikationsgerät und dem 2-Draht-Ethernet-Bussystem ausgetauschten Daten, wobei die PHY-Schnittstellenvorrichtung über eine erste Hochpassfilteranordnung (H1) mit der Kathode der Diode und über eine zweite Hochpassfilteranordnung (H2) mit dem zweiten geräteseitigen Anschluss des Brückengleichrichters verbunden ist.

2. Kommunikationsgerät nach Anspruch 1,
bei dem durch die beiden Spulen eine Tiefpassfilteranordnung für das Netzteil gebildet ist.

3. Kommunikationsgerät nach einem der Ansprüche 1 oder 2,
bei dem die beiden Spulen jeweils ohne zusätzliche zu ihnen parallel geschaltete Freilaufdiodenanordnungen an das Netzteil angeschlossen sind.

4. Kommunikationsgerät nach einem der Ansprüche 1 bis 3,
bei dem der Brückengleichrichter vier Dioden (D1-D4) umfasst, bei dem eine Anode einer ersten Gleichrichter-Diode (D1) mit dem ersten busseitigen Anschluss (B1) und eine Kathode der ersten Gleichrichter-Diode mit dem ersten geräteseitigen Anschluss (T1) verbunden ist, bei dem eine Anode einer zweiten Gleichrichter-Diode (D2) mit dem zweiten busseitigen Anschluss (B2) und eine Kathode der zweiten Gleichrichter-Diode mit dem ersten geräteseitigen Anschluss verbunden ist, bei dem eine Kathode einer dritten Gleichrichter-Diode (D3) mit dem ersten busseitigen Anschluss und eine Anode der dritten Gleichrichter-Diode mit dem zweiten geräteseitigen Anschluss (T2) verbunden ist und bei dem eine Kathode einer vierten (D4) Gleichrichter-Diode mit dem zweiten busseitigen Anschluss und eine Anode der vierten Gleichrichter-Diode mit dem zweiten geräteseitigen Anschluss verbunden ist.

5. Kommunikationsgerät nach Anspruch 4,
bei dem in Abhängigkeit eines Anschlusses des Kommunikationsgeräts an das 2-Draht-Ethernet-Bussystem entweder durch die erste Gleichrichter-Diode (D1), die Diode (D) sowie die vierte Gleichrichter-Diode (D4) oder durch die zweite Gleichrichter-Diode (D2), die Diode (D) sowie die dritte Gleichrichter-Diode (D3) eine jeweils drei in Reihe angeordnete Dioden umfassende Freilaufdiodenanordnung für die beiden Spulen (L1-L2) gebildet ist.

6. Kommunikationsgerät nach einem der Ansprüche 1 bis 5,
bei dem die PHY-Schnittstellenvorrichtung für eine differentielle Datensignalübertragung ausgestaltet ist und zumindest zwei Sendeeinheiten (TX) sowie zumindest zwei Empfangseinheiten (RX) umfasst.

7. Kommunikationsgerät nach Anspruch 6,
bei dem die beiden Hochpassfilteranordnungen (H1-H2) für die PHY-Schnittstellenvorrichtung jeweils einen niederohmigen Widerstand (R2), einen hochohmigen Widerstand (R1) sowie eine Kondensatoranordnung (C) mit zumindest zwei in Reihe geschaltete Kondensatoren umfassen, bei dem die niederohmigen Widerstände (R2) jeweils mit einer Sendeeinheit (TX) und mit der jeweiligen Kondensatoranordnung (C) verbunden sind, bei dem die hochohmigen Widerstände (R1) jeweils mit einer Empfangseinheit (RX) und mit der jeweiligen Kondensatoranordnung (C) verbunden sind, bei dem die Kondensatoranordnung (C) der ersten Hochpassfilteranordnung (H1) mit der Kathode der Diode (D) verbunden ist und bei dem die Kondensatoranordnung (C) der zweiten Hochpassfilteranordnung (H2) mit dem zweiten geräteseitigen Anschluss (T2) des Brückengleichrichters verbunden ist.

8. Kommunikationsgerät nach Anspruch 7,
bei dem die hochohmigen Widerstände (R1) eine Impedanz von 2-5 kOhm aufweisen und bei dem die niederohmigen Widerstände (R2) eine Impedanz von 50 Ohm aufweisen.

9. Kommunikationsgerät nach einem der Ansprüche 1 bis 8,
bei dem der Brückengleichrichter zur Verwendung in einem eigensicheren Schaltkreis ausgestaltet ist und gemäß IEC60079-11 eine sichere Anbindung an zu schützende Induktivitäten aufweist.

10. Kommunikationsgerät nach einem der Ansprüche 1 bis 9,
bei dem das Kommunikationsgerät einen Buseingang zum Anschluss an gemultiplexte Versorgungsleitungen des 2-Draht-Ethernet-Bussystems umfasst, die zur gleichzeitigen Energie- und Datenübertragung ausgestaltet sind, und bei dem die busseitigen Anschlüsse des Brückengleichrichters mit dem Buseingang verbunden sind.

11. Kommunikationsgerät nach einem der Ansprüche 1 bis 10, bei dem das Kommunikationsgerät entsprechend Ethernet Advanced Physical Layer ausgestaltet ist.

12. Kommunikationsgerät nach einem der Ansprüche 1 bis 11, bei dem durch den Brückengleichrichter, die Diode, die erste und zweite Spule sowie die erste und zweite Hochpassfilteranordnung ein in das Kommunikationsgerät integrierter Leitungstreiber gebildet ist.

13. Kommunikationsgerät nach einem der Ansprüche 1 bis 12, bei dem die erste Spule (L1) mit einem ersten Netzteilanschluss (P1) verbunden ist, bei dem die zweite Spule (L2) mit einem zweiten Netzteilanschluss (P2) verbunden ist und bei dem das Netzteil (PSU) als Gleichspannungsnetzteil ausgestaltet ist.

14. Kommunikationsgerät nach einem der Ansprüche 1 bis 13, bei dem das Netzteil (PSU) über die erste Spule (L1) mit dem ersten geräteseitigen Anschluss (T1) des Brückengleichrichters statt mit der Diode (D) verbunden ist, bei dem die Anode der Diode (D) mit einem ersten Busanschluss des Kommunikationsgeräts verbunden ist, bei dem die Kathode der Diode (D) mit dem ersten busseitigen Anschluss (B1) des Brückengleichrichters verbunden ist und bei dem der zweite busseitige Anschluss (B2) des Brückengleichrichters einen zweiten Busanschluss des Kommunikationsgeräts bildet.

15. Leitungstreiber für einen Anschluss eines Kommunikationsgeräts, das ein Netzteil und eine PHY-Schnittstellenvorrichtung umfasst, an ein 2-Draht-Ethernet-Bussystem, bei dem der Leitungstreiber
- einen Brückengleichrichter, der zwei busseitige Anschlüsse (B1-B2) und zwei geräteseitige Anschlüsse (T1-T2) umfasst,
- eine Diode (D), deren Anode an einen ersten geräteseitigen Anschluss (T1) des Brückengleichrichters angeschlossen ist,
- eine mit dem Netzteil des Kommunikationsgeräts verbindbare erste Spule (L1), die mit einer Kathode der Diode (D) verbunden ist,
- eine mit dem Netzteil des Kommunikationsgeräts verbindbare zweite Spule (L2), die mit einem zweiten geräteseitigen Anschluss (T2) des Brückengleichrichters verbunden ist,
- eine mit der PHY-Schnittstellenvorrichtung des Kommunikationsgeräts verbindbare erste Hochpassfilteranordnung (H1), die mit der Kathode der Diode (D) verbunden ist, und
- eine mit der PHY-Schnittstellenvorrichtung des Kommunikationsgeräts verbindbare zweite Hochpassfilteranordnung (H2) umfasst, die mit dem zweiten geräteseitigen Anschluss (T2) des Brückengleichrichters verbunden ist.
